# EUROPEAN PATENT APPLICATION

(11) **EP 2 735 431 A1**
(43) Date of publication of application: **28.05.2014**
(21) Application number: 12815567.8
(22) Date of filing: 12.07.2012
(51) Int. Cl.: B29C 55/12, B32B 27/34, C08J 5/18, B29K 77/00, B29L 7/00

(54) **BIAXIALLY STRETCHED NYLON FILM FOR COLD MOLDING, LAMINATE FILM, AND MOLDED BODY**

(30) Priority: 15.07.2011 JP 2011157204
(71) Applicant: Idemitsu Unitech Co. Ltd., Tokyo 108-0014 (JP)
(72) Inventor: TAKASHIGE Masao, Osaka-shi Osaka 541-0056 (JP)
(74) Representative: Skone James, Robert Edmund
(86) International application number: PCT/JP2012/067771
(87) International publication number: WO 2013/011909

(57) **Abstract**

In a biaxially oriented nylon film for cold forming, respective tensile stresses σ_{0.5} in four directions of an MD direction, a TD direction, a 45-degree direction and a 135-degree direction at a time when a strain is 0.5 are each in a range from 120 MPa to 240 MPa in a stress-strain curve obtained through a tensile test conducted on the film under conditions comprising a sample width of 15 mm, a distance between gauge points of 50 mm and a tensile speed of 100 mm/min, and a ratio σₘₐₓ / σₘᵢₙ between a maximum stress σₘₐₓ and a minimum stress σₘᵢₙ of the stresses in the four directions at the time when the strain is 0.5 is 1.6 or less.

## Description

### TECHNICAL FIELD

The present invention relates to a biaxially oriented nylon film for cold forming, a laminated film including the biaxially oriented nylon film, and a molded article cold-formed from the laminated film.

### BACKGROUND ART

Biaxially oriented nylon film, which is excellent in strength, impact resistance and anti-pinhole property, is frequently used to package products, such as a heavy product and liquid product, on which a great load is applied.

There has been conventionally known a technique of forming a packaging material from nylon by a forming process such as deep drawing and stretch forming (see, for instance, Patent Literatures 1 and 2).

Specifically, Patent Literature 1 discloses a resin sheet for cold forming that includes: a base layer that contains a polystyrene-based resin; and a functional layer that is single-layered or multilayered on both surfaces or one surface of the base layer. In addition, according to Patent Literature 1, an abrasion resistance layer that contains a nylon resin is provided as the functional layer on an exterior layer of the resin sheet for cold forming.

With the resin sheet for cold forming, a cold-formed article that is excellent in impact resistance and shape-retaining property can be obtained. By providing the abrasion resistance layer containing the nylon resin on the exterior layer of the sheet, the exterior layer of the sheet can be prevented from being damaged during cold forming.

As described in Patent Literature 1, as compared with hot forming, cold forming is excellent in that a size of an apparatus can be reduced with a heater being omitted and that a continuous forming at a high speed can be achieved.

Patent Literature 2 discloses a composite sheet for deep drawing that is formed by laminating plural pieces of sheet that includes a seal layer, a middle layer and an outer layer. In this sheet, the seal layer includes a polypropylene-based resin layer, the middle layer includes an oxygen-barrier resin layer, a nylon-based resin layer and a polyethylene-based resin layer, and the outer layer is made of a hygroscopic material.

With the nylon-based resin layer in the middle layer, a mechanical strength can be given to the composite sheet for deep drawing. Thus, formation of a pinhole during deep drawing at approximately 150 degrees C can be prevented.

### CITATION LIST

### PATENT LITERATURE(S)

Patent Literature 1: JP-A-2004-74795
Patent Literature 2: JP-A-2004-98600

### SUMMARY OF THE INVENTION

### PROBLEM(S) TO BE SOLVED BY THE INVENTION

However, since there is no detailed description in Patent Literature 1 with respect to the nylon-based resin layer provided on the exterior layer of the resin sheet for cold forming, the resin sheet may not be preferable in terms of formability, strength and anti-pinhole property for cold forming depending on the nylon-based resin layer used therein. In particular, during cold forming of a molded article of a sharp shape, a pinhole is likely to be formed.

In Patent Literature 2, although there is a detailed description with respect to a material used to form the nylon-based resin layer, there is no detailed description with respect to mechanical properties such as an elongation ratio of the nylon-based resin layer. In addition, although referring to deep forming at approximately 150 degrees C, Patent Literature 2 does not refer to cold forming. Thus, the technique described in Patent Literature 2 has the same problems as that of Patent Literature 1.

An object of the invention is to provide a biaxially oriented nylon film for cold forming that can provide an excellent cold formability after being laminated on a seal base, a laminated film including the biaxially oriented nylon film, and a molded article cold-formed from the laminated film.

### MEANS FOR SOLVING THE PROBLEM(S)

In short, according to an aspect of the invention, a biaxially oriented nylon film described below is provided.
(1) A biaxially oriented nylon film for cold forming made of nylon 6 is provided, in which respective tensile stresses σ_{0.5} in four directions of an MD direction, a TD direction, a 45-degree direction and a 135-degree direction at a time when a strain is 0.5 are each in a range from 120 MPa to 240 MPa in a stress-strain curve obtained through a tensile test conducted on the film under conditions including a sample width of 15 mm, a distance between gauge points of 50 mm and a tensile speed of 100 mm/min, and a ratio σₘₐₓ / σₘᵢₙ between a maximum stress σₘₐₓ and a minimum stress σₘᵢₙ of the stresses in the four directions at the time when the strain is 0.5 is 1.6 or less.
(2) In the biaxially oriented nylon film for cold forming, an elongation ratio in each of the four directions increased until the film is ruptured during the tensile test is in a range from 70 percent to 200 percent.
(3) A laminated film provided by laminating the biaxially oriented nylon film for cold forming.
(4) A molded article cold-formed from the laminated film.

According to the above aspect, it is possible to provide a biaxially oriented nylon film for cold forming with an excellent cold formability. Further, since a pinhole is unlikely to be formed in a laminated film including this nylon film during cold deep drawing or the like, the laminated film is usable to manufacture a molded article of a sharp shape.

The term "cold forming" herein refers to a forming that is performed under an atmosphere at a temperature less than a glass transition point (Tg) of a resin. Preferably in cold forming, using a cold-forming machine for forming aluminum foil or the like, a sheet material is forced into a female die with a male die to be pressed at a high speed. In this manner, without being heated, the sheet material can experience such a plastic deformation as molding, bending, shearing and drawing.

### BRIEF DESCRIPTION OF DRAWING(S)

Fig. 1 shows an example of a stress-strain curve obtained when an ONy film according to an exemplary embodiment of the invention is subjected to a tensile test (Example 1).
Fig. 2 shows another example of a stress-strain curve obtained when the ONy film according to the exemplary embodiment of the invention is subjected to the tensile test (Example 2).
Fig. 3 schematically shows a biaxially orienting apparatus used to manufacture the ONy film according to the exemplary embodiment of the invention.

### DESCRIPTION OF EXEMPLARY EMBODIMENT(S)

An exemplary embodiment of the invention will be described in detail below. Arrangement of Biaxially Oriented Nylon Film

A biaxially oriented nylon film (hereinafter also referred to as "ONy film") according to an exemplary embodiment is provided by biaxially orienting an unoriented raw film made of nylon 6 (hereinafter also referred to as "Ny6") and heat-treating (heat-fixing) the oriented raw film at a predetermined temperature. By biaxially orienting the unoriented raw film as described above, an ONy film excellent in anti-pinhole property and impact resistance can obtained.

In the exemplary embodiment, an elongation ratio increased until a tensile rupture, a stress ratio (σₘₐₓ / σₘᵢₙ) and a tensile-rupture strength σ_{b} of the ONy film in each of four directions (MD direction, TD direction, 45-degree direction and 135-degree direction) are obtained based on a stress-strain curve obtained through a tensile test (a sample width of 15 mm, a distance between gauge points of 50 mm and a tensile speed of 100 mm/min) conducted on the ONy film.

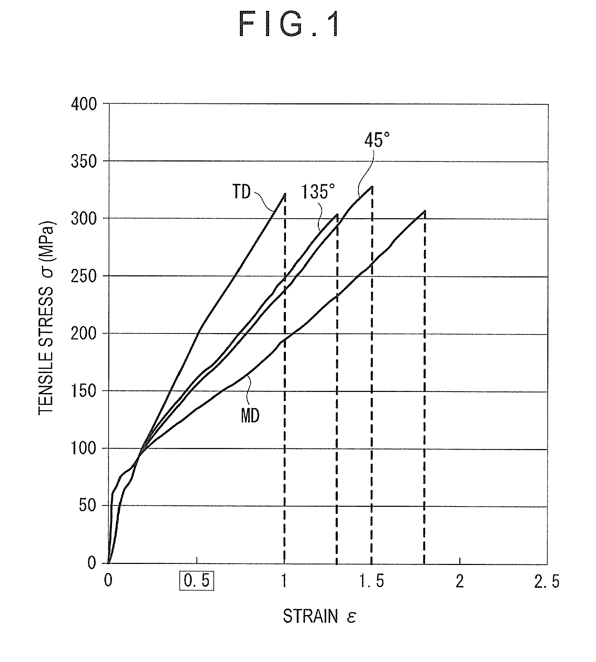

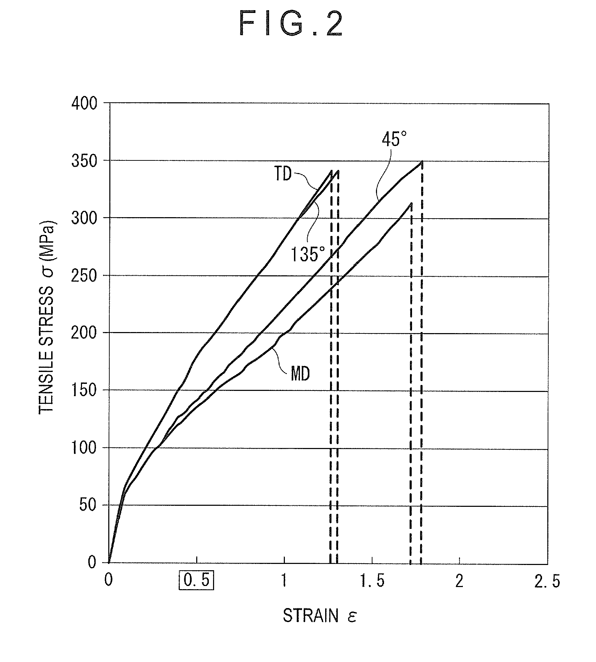

Examples of the stress-strain curve obtained through the tensile test are shown in Figs. 1 and 2. A method of manufacturing the ONy film exhibiting this curve will be described in detail in Examples.

In each of Figs. 1 and 2, the vertical scale shows a tensile stress σ (MPa) of the ONy film while the horizontal scale shows a strain ε of the ONy film (ε = Δl / 1, in which 1 represents an initial length of the film and Δl represents an increment in the film length). During the tensile test on the ONy film, the tensile stress σ is increased in such a manner as to substantially satisfy a direct function in accordance with an increase in the strain ε, and an increasing trend of the tensile stress σ is greatly changed at a predetermined strain. This point is herein referred to as a yield point. When the strain ε is further increased, the tensile stress σ is also increased accordingly. When the strain ε is increased up to a predetermined strain ε, the film is ruptured. Figs. 1 and 2 each show respective stress-strain curves related to the four directions (MD direction, TD direction, 45-degree direction and 135-degree direction).

In the ONy film according to the exemplary embodiment, the respective elongation ratios in the four directions (MD direction, TD direction, 45-degree direction and 135-degree direction) increased until the film rupture in the tensile test are preferably 70 percent or more. In other words, as in the stress-strain curves shown in Figs. 1 and 2, the strain ε at the time of the film rupture is preferably 0.7 or more. With this arrangement, the ONy film can be stretched in a balanced manner, thereby improving a drawing formability of the ONy film when the ONy film is included in a laminate material. When the elongation ratio in any one of the four directions is less than 70 percent, the film is likely to be ruptured during cold deep drawing or the like, so that a favorable formability may not be obtained. On the other hand, when the elongation ratio exceeds 200 percent, it is likely that the film is deformable with less resistance and thus unevenness of the film thickness is controlled with less accuracy, so that a favorable formability may not be obtained.

In the stress-strain curve of the ONy film according to the exemplary embodiment exemplarily shown in Fig. 1 or 2, a tensile stress σ_{0.5} at the time when the strain is 0.5 needs to be 120 MPa or more, preferably 130 MPa or more and more preferably 140 MPa or more in each of the four directions. With this arrangement, formation of a pinhole during cold deep drawing or the like can be reliably prevented, so that a molded article of a sharp shape can be manufactured. When the tensile stress in even one of the directions is less than 120 MPa, the film thickness is uneven and the film is partially thinned, so that the film is likely to be ruptured.

Further, the tensile stress σ_{0.5} at the time when the strain is 0.5 needs to be 240 MPa or less in each of the four directions. When the tensile stress σ_{0.5} in even one of the directions exceeds 240 MPa, a laminated film is unfavorably unlikely to be deformed. Accordingly, a preferable tensile stress in each of the four directions is 230 MPa or less.

A ratio (σₘₐₓ / σₘᵢₙ) between a maximum stress σₘₐₓ and a minimum stress σₘᵢₙ of the stresses in the four directions at the time when the strain is 0.5 needs to be 1.6 or less, preferably 1.5 or less. By satisfying this condition in addition to the condition described above, the film can be stretched in a balanced manner during cold forming, so that a molded article with an even thickness can be manufactured. When the ratio σₘₐₓ /σₘᵢₙ exceeds 1.6, the film thickness is uneven and the film is partially thinned, so that the film is likely to be ruptured. When the ratio of tensile stress between the measurement directions is large, the film has a portion with a relatively low tensile stress. A partial deformation of the film is likely to progress at the portion with a low tensile stress due to concentration of stress thereon as compared with a portion with a high tensile stress, so that a pin hole is likely to be formed in the portion with a low tensile stress.

Further, in the stress-strain curve exemplarily shown in Fig. 1 or 2, the tensile-rupture strength σ_{b} of the ONy film according to the exemplary embodiment in each of the four directions is preferably 250 MPa or more and more preferably 280 MPa or more. With this arrangement, a sufficient processing strength can be obtained, so that the ONy film is further unlikely to be ruptured during cold deep forming or the like. The term "processing strength" herein means a resistance against cold forming.

### Manufacturing Method of ONy Film

The above-described ONy film can be obtained by biaxially orienting an unoriented raw film made of Ny6 under a condition where an oriented ratio in each of the MD direction and the TD direction is in a range from 2.8 times to 3.7 times and then heat-treating the oriented raw film at a temperature of 190 to 215 degrees C for 5 seconds to 1 minute.

In the above manufacturing method, by appropriately adjusting the oriented ratio in each of the MD direction and the TD direction and the conditions for the heat treatment, it is possible to control the elongation ratio increased until a tensile rupture, the tensile-rupture strength σ_{b}, the tensile stress σ_{0.5} at the time when the strain is 0.5, and the predetermined stress ratio (σₘₐₓ / σₘᵢₙ) of the ONy film in each of the four directions (MD direction, TD direction, 45-degree direction and 135-degree direction).

As a method of biaxial orienting, a simultaneous biaxial orienting and a sequential biaxial orienting using a tubular method or a tenter method are usable. However, in light of an in-plane strength balance of the film, the simultaneous biaxial orienting using the tubular method is preferably performed.

Specifically, the ONy film according to the exemplary embodiment can be manufactured as follows.

First, after Ny6 pellets are melt-kneaded in an extruder at 270 degrees C, a molten material is extruded from a die in a shape of cylindrical film and subsequently quenched with water, thereby preparing a raw film.

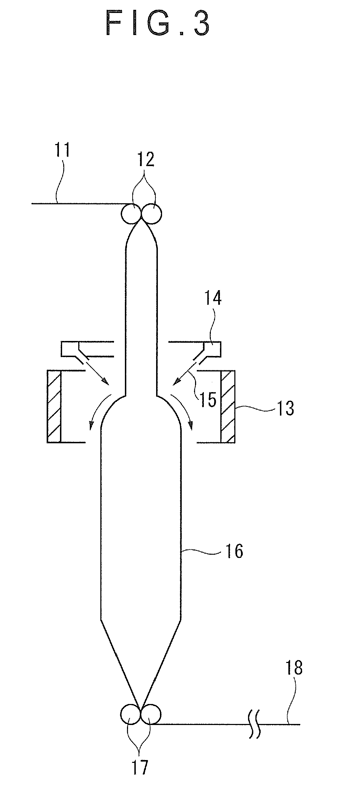

Next, as exemplarily shown in Fig. 3, after inserted between a pair of nip rollers 12, the raw film 11 is heated by a heater 13 while a gas is injected into the raw film 11. Further, the raw film 11 is blown with air 15 from an air ring 14 at a drawing start point to be inflated into a bubble 16 and pulled using a pair of nip rollers 17 provided at a downstream side. In this manner, the simultaneous biaxial orienting in the MD direction and the TD direction using the tubular method is performed. At this time, the oriented ratio in each of the MD direction and the TD direction is required to be 2.8 times or more. When the oriented ratio is less than 2.8 times, an impact strength is lowered, which is practically unfavorable.

After the above process, the oriented film is put in a tenter heat treat furnace (not shown) to be heat-treated at 190 to 215 degrees C, thereby obtaining an ONy film 18 according to the exemplary embodiment. When the heat-treating temperature is higher than 215 degrees C, an anisotropy in a width direction is increased due to an excessive growth of a bowing phenomenon and the strength of the film is lowered due to an excessive increase in crystallinity degree. On the other hand, when the heat-treating temperature is lower than 190 degrees C, the film may be easily shrunk during a secondary processing due to an excessive increase in film shrinkage factor. As a result, base films of a manufactured laminated film are further likely to be separated from each other.

### Arrangement of Laminated Film

To provide a laminated film according to the exemplary embodiment, at least one surface of the ONy film is laminated with one layer or two or more layers of another laminate base. Specifically, the laminate base laminated on the surface of the ONy film may be an aluminum layer, a film including an aluminum layer, or the like.

Generally, a laminated film including an aluminum layer is not suitable for cold forming because the aluminum layer is easily rupturable due to necking during cold forming. However, since the laminated film according to the exemplary embodiment includes the ONy film that is excellent in a formability, impact resistance and anti-pinhole property, the aluminum layer can be prevented from being ruptured during cold stretch forming, cold deep drawing or the like, resulting in suppression of formation of a pinhole in the packaging material. Thus, even when the total thickness of the laminated film is small, a molded article of a sharp shape with a high strength can be obtained.

The total thickness of the laminated film according to the exemplary embodiment (i.e., a sum of thicknesses of the ONy film and other laminate base(s)) is preferably 200 µm or less. When the total thickness exceeds 200 µm, a corner of the laminated film is unlikely to be formed by cold forming, so that a molded article of a sharp shape may not be obtained.

The thickness of the ONy film in the laminated film according to the exemplary embodiment is preferably in a range from 5 µm to 50 µm, more preferably from 10 µm to 40 µm When the thickness of the ONy film is less than 5µm, the impact resistance of the laminated film may be deteriorated, so that a sufficient cold formability may not be obtained. Additionally, the thickness of the ONy film exceeding 50 µm is also unfavorable because the impact resistance of the laminated film is not further improved while the total thickness of the film is increased.

As the aluminum layer used in the laminated film according to the exemplary embodiment, aluminum foil made of pure aluminum or of a soft material of aluminum-iron alloy may be used. In order to improve laminate property, before laminated on the ONy film, the aluminum foil is preferably subjected to a pretreatment such as an undercoating treatment using silane coupling agent, titanium coupling agent or the like and a corona discharge treatment.

The thickness of the pretreated aluminum layer is preferably in a range from 20 µm to 100 µm With this arrangement, a shape of the molded article can be well-maintained, and oxygen, moisture and the like can be prevented from being permeated through the packaging material.

When the thickness of the aluminum layer is less than 20 µm, the aluminum layer is likely to be ruptured during cold forming of the laminated film. Even when the aluminum layer is not ruptured, a pinhole or the like is likely to be formed. Thus, oxygen, moisture and the like may be permeated through the packaging material. Additionally, the thickness of the aluminum layer exceeding 100 µm is also unfavorable because neither rupture during cold forming nor formation of a pinhole is prevented with a further efficiency while the total thickness of the packaging material is increased.

The above-described preferable arrangements for the invention are not intended to limit the invention. In other words, while the invention has been described with reference to the specific exemplary embodiment, various modifications in material, number and any other factor may be made to the above-described exemplary embodiment by those of ordinary skill in the art without departing from the spirit and scope of the invention.

Therefore, the description that limits the materials, the layer arrangements and the like is only an example to make the invention easily understood, but is not intended to limit the invention, so that the invention includes the description using a name without a part of or all of the limitation on the materials etc.

For instance, although the tubular method is used as the method of biaxial orienting in the exemplary embodiment, the tenter method may be used instead. In addition, the method of orienting may be simultaneous biaxial orienting or sequential biaxial orienting.

The ONy film may be added with any necessary additives as desired. Examples of such additives are an anti-blocking agent (e.g., inorganic filler), a water repellant (e.g., ethylene-bis-stearate ester) and a lubricant (e.g., calcium stearate).

Although the laminated packaging material in which the aluminum layer etc. is laminated on the ONy film is exemplified in the above exemplary embodiment, the arrangement is not limited thereto. In the laminated packaging material according to the invention, various functional layers such as a sealant layer, an antistatic layer, a print layer, a barrier layer and a reinforcing layer may be further laminated.

### Examples

Next, the invention will be described in further detail with reference to Examples and Comparative Examples. It should be noted that these examples are not intended to limit the invention.

### Example 1

### Manufacturing of ONy Film

After Ny6 pellets were melt-kneaded in an extruder at 270 degrees C, a molten material was extruded from a die in a shape of cylindrical film and subsequently quenched with water, thereby preparing a raw film. As the Ny6, nylon 6 manufactured by Ube Industries, Ltd. [UBE NYLON 1023FD (trade name), relative viscosity: ηr = 3.6] was used.

Next, as shown in Fig. 3, after inserted between the pair of nip rollers 12, the raw film 11 was heated by the heater 13 while a gas was injected into the raw film 11. Further, the raw film 11 was blown with the air 15 from the air ring 14 at the drawing start point to be inflated into the bubble 16 and pulled using the pair of nip rollers 17 provided at the downstream side. In this manner, the simultaneous biaxial orienting in the MD direction and the TD direction using the tubular method was performed. The oriented ratios in the MD direction and the TD direction at the time of the orienting were 3.0 times and 3.5 times, respectively.

Subsequently, the oriented film was put in a tenter heat treat furnace (not shown) and heat-treated at 210 degrees C, thereby obtaining the ONy film 18 according to this example (hereinafter also referred to as ONy film 18). A film thickness was 25 µm.

### Example 2

A film was manufactured in the same manner as in Example 1 except that an oriented ratio in the MD direction was set at 3.0 times, an oriented ratio in the TD direction was set at 3.3 times, and a heat-treating temperature was set at 200 degrees C. A film thickness was 25 µm.

### Example 3

A film was manufactured in the same manner as in Example 1 except that an oriented ratio in the MD direction was set at 3.0 times, an oriented ratio in the TD direction was set at 3.4 times, and a heat-treating temperature was set at 205 degrees C. A film thickness was 15 µm.

### Example 4

A film was manufactured in the same manner as in Example 1 except that an oriented ratio in the MD direction was set at 3.0 times, an oriented ratio in the TD direction was set at 3.2 times, and a heat-treating temperature was set at 195 degrees C. A film thickness was 15 µm.

### Example 5

A film was manufactured in the same manner as in Example 1 except that an oriented ratio in the MD direction was set at 3.2 times, an oriented ratio in the TD direction was set at 3.4 times, and a heat-treating temperature was set at 210 degrees C. A film thickness was 25 µm.

### Example 6

A film was manufactured in the same manner as in Example 1 except that an oriented ratio in the MD direction was set at 3.1 times, an oriented ratio in the TD direction was set at 3.6 times, and a heat-treating temperature was set at 205 degrees C. A film thickness was 12 µm.

### Example 7

A film was manufactured in the same manner as in Example 1 except that an oriented ratio in the MD direction was set at 2.9 times, an oriented ratio in the TD direction was set at 3.4 times, and a heat-treating temperature was set at 210 degrees C. A film thickness was 20 µm.

### Comparative Examples 1 to 7

The following commercially available ONy films were used.
Comparative Example 1: a film of Company A manufactured by sequential biaxial orienting using a tenter method (15 µm)
Comparative Example 2: a film of Company B manufactured by sequential biaxial orienting using a tenter method (15 µm)
Comparative Example 3: a film of Company B manufactured by simultaneous biaxial orienting using a tenter method (15 µm)
Comparative Example 4: a film of Company B manufactured by simultaneous biaxial orienting using a tenter method (25 µm)
Comparative Example 5: a film of Company C manufactured by simultaneous biaxial orienting using a tubular method (15 µm)
Comparative Example 6: a film of Company D manufactured by simultaneous biaxial orienting using a tubular method (25 µm)
Comparative Example 7: a film of Company D manufactured by simultaneous biaxial orienting using a tubular method (15 µm)

### Evaluation Method

### Tensile Test

A tensile test of each ONy film was conducted with a tester manufactured by Instron Corporation (tester type: 5564) under conditions: a sample with of 15 mm; a distance between gauge points of 50 mm; and a tensile speed of 100 mm/min. Measurement of each ONy film was continued until the film was ruptured in each of the MD direction, TD direction, 45-degree direction and 135-degree direction. Based on obtained respective stress-strain curves related to the four directions, a rupture elongation ratio in each direction, a rupture strength σ_{b} in each direction, a value of tensile stress σ_{0.5} in each direction at the time when the strain is 0.5, and a ratio σₘₐₓ / σₘᵢₙ between the maximum value (σₘₐₓ) and the minimum value (σₘᵢₙ) of the values of σ_{0.5} in the four directions were obtained. Incidentally, Figs. 1 and 2 show stress-strain curves related to the ONy films of Examples 1 and 2, respectively.

### Cold Formability

A cold formability (drawing formability) of a laminated film in which the ONy film was laminated was evaluated.

Specifically, a laminated film was prepared by dry-laminating the ONy film according to each of Examples and Comparative Examples (i.e., a front base film) on an L-LDPE film having a 120-µm thickness (UNILAX LS-711C (trade name), manufactured by Idemitsu Unitech CO., LTD) (i.e., a sealant film). As an adhesive for dry laminating, a blend of TAKELAC A-615 and TAKENATE A-65 (both are manufactured by Mitsui Takeda Chemicals, Inc.) was used (blend ratio: 16/1). The laminated packaging material after the films were dry-laminated was subjected to an aging treatment at 40 degrees C for three days.

The thus prepared laminated films were each subjected to cold deep drawing (at a normal temperature) using a die rectangular in plan view (5mm-by-10mm). The laminated packaging materials were each subjected to the above-described deep drawing ten times, and frequency of defects such as pinhole and crack was counted. When no defect occurred at any of the ten times, the laminated film was rated as A. When a defect occurred once or twice out of the ten times, the laminated film was rated as B, when three to five times, rated as C, and when six times or more, rated as D.

**Table 1**

| | Rupture Elongation Ratio (%) | | | | Rupture Strength σ_{b} (MPa) | | | | σ _{0.5} (MPa) | | | | σₘₐₓ/ σₘᵢₙ | Cold Formability |
|---|---|---|---|---|---|---|---|---|---|---|---|---|---|---|
| | MD | TD | 45° | 135° | MD | TD | 45° | 135° | MD | TD | 45° | 135° | | |
| Ex. 1 | 180 | 100 | 150 | 130 | 310 | 325 | 330 | 305 | 135 | 195 | 160 | 160 | 1.44 | A |
| Ex. 2 | 170 | 125 | 180 | 130 | 310 | 340 | 350 | 340 | 140 | 180 | 140 | 175 | 1.29 | A |
| Ex. 3 | 140 | 105 | 110 | 120 | 285 | 350 | 310 | 300 | 145 | 200 | 155 | 150 | 1.38 | A |
| Ex. 4 | 155 | 130 | 135 | 150 | 330 | 360 | 355 | 340 | 140 | 180 | 170 | 155 | 1.29 | A |
| Ex. 5 | 120 | 90 | 110 | 115 | 315 | 335 | 350 | 320 | 160 | 205 | 190 | 180 | 1.24 | A |
| Ex. 6 | 130 | 95 | 115 | 100 | 275 | 335 | 300 | 275 | 120 | 180 | 170 | 165 | 1.50 | A |
| Ex. 7 | 145 | 110 | 120 | 115 | 295 | 370 | 320 | 305 | 150 | 240 | 170 | 160 | 1.60 | A |
| Comp. 1 | 160 | 105 | 170 | 90 | 200 | 310 | 210 | 270 | 110 | 190 | 110 | 180 | 1.73 | D |
| Comp. 2 | 160 | 90 | 115 | 145 | 210 | 370 | 350 | 230 | 120 | 250 | 185 | 125 | 2.08 | D |
| Comp. 3 | 120 | 100 | 110 | 125 | 240 | 240 | 380 | 190 | 160 | 170 | 250 | 130 | 1.92 | D |
| Comp. 4 | 140 | 150 | 200 | 80 | 290 | 285 | 250 | 360 | 120 | 285 | 160 | 170 | 2.34 | D |
| Comp. 5 | 180 | 130 | 160 | 165 | 240 | 310 | 270 | 260 | 100 | 140 | 120 | 120 | 1.40 | D |
| Comp. 6 | 195 | 130 | 170 | 160 | 270 | 305 | 290 | 285 | 115 | 155 | 135 | 135 | 1.35 | C |
| Comp. 7 | 170 | 145 | 165 | 170 | 250 | 280 | 280 | 260 | 115 | 135 | 125 | 120 | 1.17 | C |

### Evaluation Result

As shown in Table 1, the laminated film according to each of Examples exhibits an excellent deep-drawing formability (cold formability) because the ONy film used therein satisfies predetermined conditions regarding σ_{0.5} and σₘₐₓ / σₘᵢₙ.

In contrast, the laminated film according to any of Comparative Examples is inferior in cold formability because any of the above conditions is not satisfied. Incidentally, the values of σ_{0.5} and σₘₐₓ / σₘᵢₙ out of the ranges according to the invention are each shown in italics with an underline to be emphasized.

### INDUSTRIAL APPLICABILITY

The invention is applicable to a packaging material for cold forming and the like.

### EXPLANATION OF CODE(S)

- 11: raw film
- 12: nip roller
- 13: heater
- 14: air ring
- 15: air
- 16: bubble
- 17: nip roller
- 18: oriented film

## Claims

1. A biaxially oriented nylon film for cold forming made of nylon 6, wherein
respective tensile stresses σ_{0.5} in four directions of an MD direction, a TD direction, a 45-degree direction and a 135-degree direction at a time when a strain is 0.5 are each in a range from 120 MPa to 240 MPa in a stress-strain curve obtained through a tensile test conducted on the film under conditions comprising a sample width of 15 mm, a distance between gauge points of 50 mm and a tensile speed of 100 mm/min, and
a ratio σₘₐₓ / σₘᵢₙ between a maximum stress σₘₐₓ and a minimum stress σₘᵢₙ of the stresses in the four directions at the time when the strain is 0.5 is 1.6 or less.

2. The biaxially oriented nylon film for cold forming according to claim 1, wherein an elongation ratio in each of the four directions increased until the film is ruptured during the tensile test is in a range from 70 percent to 200 percent.

3. A laminated film provided by laminating the biaxially oriented nylon film for cold forming according to claim 1 or 2.

4. A molded article cold-formed from the laminated film according to claim 3.
